# EUROPEAN PATENT APPLICATION

(11) **EP 1 684 493 A2**
(43) Date of publication of application: **26.07.2006**
(21) Application number: 06001459.4
(22) Date of filing: 24.01.2006
(51) Int. Cl.: H04M 1/60

(54) **Apparatus and method for automatically reporting a speakerphone call mode of a portable wireless terminal to a calling partner**

(30) Priority: 24.01.2005 KR 2005006322
(71) Applicant: Samsung Electronics Co., Ltd., Suwon-si, Gyeonggi-Do (KR)
(72) Inventor: Hwang, Jung-Eun, Dongan-gu, Anyang-si, Gyeonggi-do (KR)
(74) Representative: Grünecker, Kinkeldey, Stockmair & Schwanhäusser Anwaltssozietät

(57) **Abstract**

Disclosed is a method for automatically reporting a speakerphone call mode of a portable wireless terminal having a speakerphone module to a calling partner. The method includes entering a call mode when a call is initiated; determining whether the speakerphone call mode is turned on after the initiation of the call mode; reading a predetermined report message for reporting an on state of the speakerphone call mode from a memory of the portable wireless terminal when the speakerphone call mode is turned on; and transmitting the predetermined report message to the calling partner's terminal. Accordingly, the method makes it possible to efficiently prevent an invasion of privacy of the calling partner without causing inconvenience to the user of the portable wireless terminal.

## Description

The present invention relates to an apparatus and method for automatically reporting a speakerphone call mode of a portable wireless terminal to a calling partner, and more particularly, to an apparatus and method for automatically transmitting a voice message for reporting an on state of a speakerphone call mode of a portable wireless terminal to a calling partner's terminal when a call mode of the portable wireless terminal is converted from a general call mode to a speakerphone call mode.

With the development of electronic and communication industries, the use of portable wireless terminals is becoming popular and the portable wireless terminals are being developed to be compact, lightweight and have multi-functional features to satisfy the user's demands.

In view of software, portable wireless terminals can provide a music download service and a video-on-demand (VOD) service, as well as a call service. Also, the portable wireless terminals can take a photograph and store it in a photo album therein. In view of hardware, peripheral devices attachable to the portable wireless terminals are also being developed. For example, an attachable built-in digital camera module, a TV tuner module for terrestrial broadcasting, an MP3 player module, and a high-performance speaker module are now available as peripheral devices. That is, the portable wireless terminals conveniently have a multimedia function in addition to a call function.

However, the multimedia function can cause problems such as invasion of privacy and release of personal information. Specifically, a camera phone may cause such problems most seriously. Various regulations have been proposed to prevent unauthorized photographing activities using the camera phone. For example, the camera phone are now equipped with devices for generating a flash and a beep sound when its shutter is pressed down to alert bystanders of use of the camera phone, and camera phones are now prohibited from being carried in specific places.

A speakerphone function also causes a problem in that one party cannot know whether or not an opposing party's terminal is in a speakerphone call mode during their call. That is, the privacy of the one party may be invaded without his knowledge by the other party.

Unlike the camera phone, there is no method for preventing the privacy invasion due to the unauthorized use of the speaker phone function.

It is the object of the present invention to provide an apparatus and method for automatically reporting a speakerphone call mode of a portable wireless terminal to a calling partner.

This object is solved by the subject matter of the independent claims.

Preferred embodiments are defined in the dependent claims.

According to one aspect of the present invention, there is also provided an apparatus and method for automatically transmitting a predetermined voice message from a portable wireless terminal to a calling partner's terminal over a currently-established traffic channel when the portable wireless terminal enters a speakerphone call mode.

Further, according to another aspect of the present invention, there is provided an apparatus and method for automatically reporting an on state of a speakerphone call mode of a portable wireless terminal to a calling partner when a call mode of the portable wireless terminal is converted from a general call mode to the speakerphone call mode.

According to an aspect of the present invention, a method for automatically reporting a speakerphone call mode of a portable wireless terminal to a calling partner is provided, the method including reading a first predetermined report message for reporting an on state of the speakerphone call mode from a memory of the portable wireless terminal when the speakerphone call mode is turned on; and transmitting the first predetermined report message to the calling partner's terminal.

The method may further include reading a second predetermined report message for reporting an off state of the speakerphone call mode from the memory when the speakerphone call mode is turned off; and transmitting the second predetermined report message to the calling partner's terminal over a currently-established traffic channel.

According to another aspect of the present invention, an apparatus for automatically reporting a speakerphone call mode of a portable wireless terminal to a calling partner is provided, the apparatus including a speakerphone module including a high-performance speaker and a high-performance microphone for a speakerphone call; a memory for storing a report message for reporting an on state of the speakerphone call mode; a controller for reading the report message from the memory when the speakerphone call mode is turned on and providing the read report message; and a transmitter for receiving the report message from the controller and transmitting the report message to the calling partner's terminal over a currently-established traffic channel.

The accompanying drawings, which are included to provide a further understanding of the invention and are incorporated in and constitute a part of this application, illustrate embodiment(s) of the invention and together with the description serve to explain the principle of the invention. In the drawings:

FIG. 1 is a block diagram of a portable wireless terminal with a speakerphone function according to an embodiment of the present invention; and

FIG. 2 is a flowchart illustrating a procedure for automatically reporting a speakerphone call mode of the portable wireless terminal shown in FIG. 1 to a calling partner.

Reference will now be made in detail to the preferred embodiments of the present invention, examples of which are illustrated in the accompanying drawings. A detail description of well-known features will be omitted for conciseness.

The present invention proposes a method for automatically reporting a speakerphone call mode of a portable wireless terminal to a calling partner. In the method, a predetermined voice message is automatically transmitted to a calling partner's terminal over a currently-established traffic channel when the call mode of the portable wireless terminal is converted from a general call mode to a speakerphone call mode. Here, the voice message may be an audio file data such as advanced audio CODEC (AAC) data, pulse code modulation (PCM) data, and adaptive multi ratio (AMR) data. The calling partner's terminal receives and decodes the voice message through a CODEC and reproduces the resulting signal through a speaker, in the same manner as for a voice call signal.

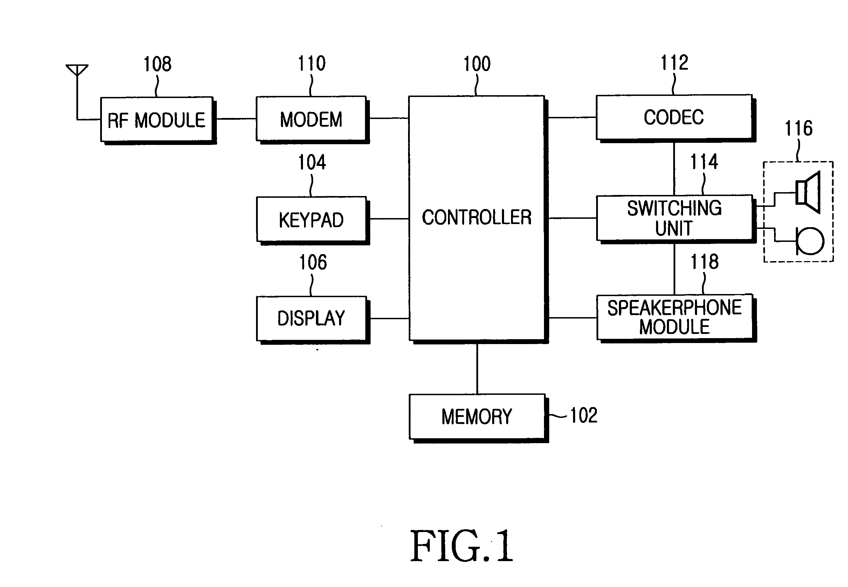

FIG. 1 is a block diagram of a portable wireless terminal with a speakerphone function according to an embodiment of the present invention. It should be noted that the portable wireless terminal includes various kinds of mobile terminals, such as a cellular phone, a Personal Communication System (PCS) phone, a Personal Data Assistant (PDA) terminal, an International Mobile Telecommunication-2000 (IMT-200) terminal, and an Orthogonal Frequency Division Multiplexing (OFDM) terminal. A following description will be made with respect to a general structure of the terminals.

Referring to FIG. 1, a controller 100 controls an overall operation of the portable wireless terminal. For example, the controller 100 processes and controls voice communication and data communication. In addition to the typical functions, the controller 100 reads a voice message prestored in a memory 102 during a speakerphone mode and transmits the read voice message to a calling partners terminal over a currently-established traffic channel. A description of the typical process and control operation of the controller 100 will be omitted for conciseness.

The memory 102 includes a program memory, a data memory, and a nonvolatile memory. The program memory stores a program for controlling an overall operation of the terminal. The program memory may be a flash memory. The data memory temporarily stores data that is generated during the operation of the portable wireless terminal. The data memory may be a random access memory (RAM). The nonvolatile memory stores system parameters and other data such as phone numbers and SMS messages. The nonvolatile memory may be an electrically erasable programmable read-only memory (EEPROM). In this embodiment, the memory 102 stores a message for reporting the on state of a speakerphone call mode and a message for reporting the off state of a speakerphone mode. These report messages may be audio file data such as AAC data, PCM data, and AMR data.

A keypad 104 includes numeric keys of digits 0-9 and a plurality of function keys, such as a menu key, a cancel (delete) key, a confirmation key, a talk key, an end key, an Internet connection key, and navigation keys (Left/Right/Up/Down). The keypad 104 provides key input data corresponding to keys pressed by a user to the controller 100. A display 106 displays status information (or indicators) of the portable wireless terminal, numerals and characters, moving pictures and still pictures, and the like. A color LCD (liquid crystal display) may be used for the display 106.

A radio frequency (RF) module 108 down-converts an RF signal received through an antenna ANT and provides the down-converted signal to a modem 110. Also, the RF module 108 up-converts a baseband signal provided from the modem 110 and transmits the up-converted signal through the antenna ANT. The modem 110 processes the baseband signals that are exchanged between the RF module 108 and the controller 100. For example, in the case of data transmission, the modem 110 performs channel coding and spreading on the transmission data. In the case of data reception, the modem 110 performs despreading and channel decoding on the reception data.

A coder-decoder (CODEC) 112 converts digital audio data (such as PCM data, AMR data, and AAC data) received from the controller 100 into analog audio signals and outputs the analog audio signals to a switching unit 114. Also, the CODEC 112 codes analog audio signals received from the switching unit 114 into digital audio data and provides the digital audio data to the controller 100.

Under the control of the controller 100, the switching unit 114 creates a voice channel between the CODEC 112 and an audio I/O unit 116 during a general call mode, and a voice channel between the CODEC 112 and a speakerphone module 118 during a speakerphone call mode. The audio I/O unit 116 includes a speaker and a microphone for input/output of a voice during the general call mode. The speakerphone module 118 includes a high-performance speaker and a high-performance microphone for input/output of a voice signal during the speakerphone call mode. Here, the speakerphone module 118 may be built in to the portable wireless terminal or may be detachably attached to the terminal.

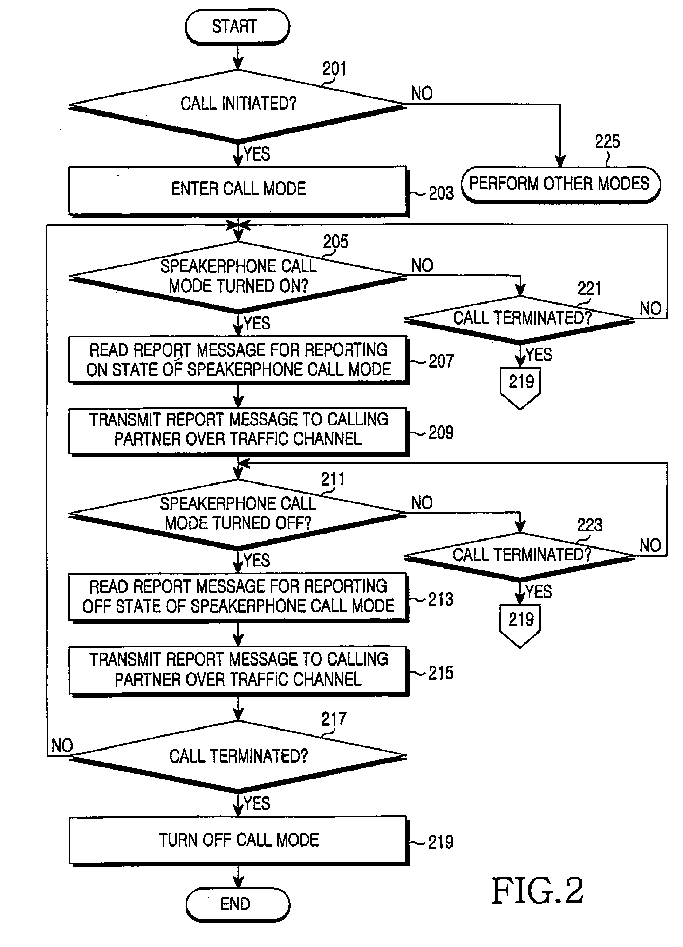

FIG. 2 is a flowchart illustrating a procedure for automatically reporting a speakerphone call mode of the portable wireless terminal shown in FIG. 1 to a calling partner. Referring to FIG. 2, in Step 201, the controller 100 determines whether a call is initiated. If so, the process proceeds to Step 203, and if not, the process proceeds to Step 225. In Step 225, the controller 100 performs other modes (for example, a standby mode). In Step 203, the controller 100 enters a call mode.

In Step 205, the controller 100 determines whether the speakerphone call mode is turned on. If so, the process proceeds to Step 207, and if not, the process proceeds to Step 221. Here, the speakerphone call mode may be turned on by default at the initiation of a call mode, by a mode switch button of the terminal during a general call, or by events of the terminal (such as action of a folder of the terminal and installation of an external speakerphone module at the terminal).

In Step 221, the controller 100 determines whether the call is terminated by disconnection of a call channel. If so, the process proceeds to Step 219, and if not, the process returns to Step 205.

In Step 207, the controller reads a voice message for reporting the on state of the speakerphone call mode (for example, "A SPEAKERPHONE MODE IS TURNED ON") from the memory 102. In Step 209, the controller transmits the read voice message to a calling partner's terminal over a currently-established traffic channel (TX PATH). Here, the voice message may be audio file data such as AAC data, PCM data, and AMR data, and the calling partner's terminal receives and decodes the voice message through a CODEC and reproduces the resulting signal through a speaker.

In Step 211, the controller 100 determines whether the speakerphone call mode is turned off. If so, the process proceeds to Step 213, and if not, the process proceeds to Step 223. Here, the speaker phone mode may be turned off by the mode switch button during the speakerphone call mode, or by events of the terminal (such as the action of the folder and the disconnection of the external speakerphone module at the terminal). In Step 223, the controller 100 determines whether the call is terminated by disconnection of the call channel. If so, the process proceeds to Step 219, and if not, the process returns to Step 211.

In Step 213, the controller 100 reads a voice message for reporting the off state of the speakerphone call mode (for example, "A SPEAKERPHONE MODE IS TURNED OFF") from the memory 102. In Step 215, the controller 100 transmits the read voice message to the calling partner's terminal over the currently-established traffic channel. As described above, the voice message may be audio file data such as AAC data, PCM data, and AMR data, and the portable wireless terminal of the calling partner receives and decodes the voice message through a CODEC and reproduces the resulting signal through a speaker.

In Step 217, the controller determines whether the call is terminated by disconnection of the call channel. If so, the process proceeds to Step 219, and if not, the process returns to Step 205. In Step 219, the controller 100 turns off the call mode and then ends the procedure.

In another embodiment of the present invention, the on/off state of the speakerphone call mode may be reported to the calling partner through a short message instead of the voice message. In a further another embodiment of the present invention, a code for controlling the calling partner's terminal may be contained in the short message and thus transmitted to the calling partner's terminal, and the calling partner's terminal may perform a predetermined operation (for example, generation of a beep sound) corresponding to the code.

As described above, the apparatus and method according to the present invention can efficiently prevent an invasion of privacy of the calling partner without causing inconvenience to the user of the portable wireless terminal, by automatically transmitting a predetermined report message from the portable wireless terminal to the calling partner's terminal when the call mode of the portable wireless terminal is converted from a general call mode to a speakerphone call mode.

The foregoing embodiments are merely exemplary and are not to be construed as limiting the present invention. The present teachings can be readily applied to other types of apparatuses. The description of the present invention is intended to be illustrative, and not to limit the scope of the claims. Many alternatives, modifications, and variations will be apparent to those skilled in the art.

## Claims

1. A method for automatically reporting a speakerphone call mode of a portable wireless terminal to a calling partner, the method comprising the steps of:
reading a first predetermined report message for reporting an on state of the speakerphone call mode from a memory of the portable wireless terminal when the speakerphone call mode is turned on; and
transmitting the first predetermined report message to the calling partner's terminal.

2. The method of claim 1, wherein the first predetermined report message is audio file data.

3. The method of claim 1, wherein the first predetermined report message is one of advanced audio CODEC (AAC) data, pulse code modulation (PCM) data and adaptive multi ratio (AMR) data.

4. The method of one of claims 1 to 3, wherein the first predetermined report message is transmitted to the calling partner's terminal over a currently-established traffic channel.

5. The method of one of claims 1 to 4, wherein the speakerphone call mode is turned on by one of default at initiation of a call mode, a mode switch button of the portable wireless terminal during a general call mode, and events of the portable wireless terminal, the events including action of a folder of the portable wireless terminal and installation of an external speakerphone module at the portable wireless terminal.

6. The method of one of claims 1 to 5, further comprising the steps of:
reading a second predetermined report message for reporting an off state of the speakerphone call mode from the memory when the speakerphone call mode is turned off; and
transmitting the second predetermined report message to the calling partner's terminal over a currently-established traffic channel.

7. The method of claim 6, wherein the speakerphone call mode is turned off by one of a mode switch button of the portable wireless terminal during the speakerphone call mode, and events of the portable wireless terminal, the events including action of a folder of the portable wireless terminal and disconnection of an external speakerphone module at the portable wireless terminal.

8. The method of one of claims 1 to 7, wherein said portable wireless terminal has a speakerphone module.

9. The method of claim 8, further comprising the steps of:
entering a call mode when a call is initiated; and
determining whether the speakerphone call mode is turned on after initiation of the call mode.

10. An apparatus for automatically reporting a speakerphone call mode of a portable wireless terminal to a calling partner, the apparatus comprising:
a speakerphone module including a high-performance speaker and a high-performance microphone for a speakerphone call;
a memory for storing a first report message for reporting an on state of the speakerphone call mode;
a controller for reading the first report message from the memory when the speakerphone call mode is turned on and providing the read first report message; and
a transmitter for receiving the first report message from the controller and transmitting the first report message to the calling partner's terminal over a currently-established traffic channel.

11. The apparatus of claim 10, wherein the first report message is audio file data.

12. The apparatus of claim 10, wherein the first report message is one of advanced audio CODEC (AAC) data, pulse code modulation (PCM) data and adaptive multi ratio (AMR) data.

13. The apparatus of one of claims 10 to 12, wherein the speakerphone call mode is turned on by one of default at initiation of the call mode, a mode switch button of the portable wireless terminal during a general call mode, and events of the portable wireless terminal, the events including action of a folder of the portable wireless terminal and installation of an external speakerphone module at the portable wireless terminal.

14. The apparatus of one of claims 10 to 13, wherein the memory further stores a second report message for reporting an off state of the speakerphone call mode, and the controller reads the second predetermined report message from the memory when the speakerphone call mode is turned off and then provides the read second report message to the transmitter.

15. The apparatus of claim 14, wherein the speakerphone call mode is turned off by one of a mode switch button of the portable wireless terminal during the speakerphone call mode, and events of the portable wireless terminal, the events including action of a folder of the portable wireless terminal and disconnection of an external speakerphone module at the portable wireless terminal.
